(19) Europäisches Patentamt
European Patent Office
Office européen des brevets

(11) Veröffentlichungsnummer: **0 524 524 A1**

(12) # EUROPÄISCHE PATENTANMELDUNG

(21) Anmeldenummer: **92111989.7**

(22) Anmeldetag: **14.07.92**

(51) Int. Cl.⁵: **C08J 7/04**, C09D 183/06, C09D 163/00

(30) Priorität: **26.07.91 DE 4124806**

(43) Veröffentlichungstag der Anmeldung: **27.01.93 Patentblatt 93/04**

(84) Benannte Vertragsstaaten: **DE FR GB IT**

(71) Anmelder: **BAYER AG**

**W-5090 Leverkusen 1 Bayerwerk(DE)**

(72) Erfinder: **Brandt, Heinz-Dieter, Dr.**
**Buschstrasse 169**
**W-4150 Krefeld(DE)**
Erfinder: **Fischer, Wolfgang, Dr.**
**Eschendonk 6**
**W-4005 Meerbusch 3(DE)**
Erfinder: **Leuschke, Christian, Dipl.-Ing.**
**Neckarstrasse 36**
**W-4047 Dormagen(DE)**
Erfinder: **Kranz, Gerhard**
**Edelratherweg 155**
**W-5090 Leverkusen(DE)**

(54) **Verfahren zum Beschichten von Polycarbonatformkörpern.**

(57) Gegenstand der vorliegenden Erfindung ist die Verwendung von speziellen Polysiloxanen, gegebenenfalls in Kombination mit Epoxiverbindungen und/oder Hydroxyverbindungen zum Beschichten von Polycarbonatformkörpern, Verfahren zum Beschichten von Polycarbonatformkörpern sowie verfahrensgemäß erhältliche, beschichtete Polycarbonatformkörper.

EP 0 524 524 A1

Gegenstand der vorliegenden Erfindung ist die Verwendung von UV-härtbaren Mischungen, enthaltend

A) 10 Gew.-% bis 100 Gew.-%, vorzugsweise 28 Gew.-% bis 88 Gew.-% und insbesondere 45 Gew.-% bis 85 Gew.-%, eines Epoxi-Gruppen-enthaltenden, OH-Gruppen-freien Polysiloxans, und gegebenenfalls

B) 0 Gew.-% bis 90 Gew.-%, vorzugsweise 10 Gew.-% bis 70 Gew.-% und insbesondere 10 Gew.-% bis 50 Gew.-%, anderer Epoxi-Gruppen-haltiger, OH-Gruppen-freier Verbindungen als A), und/oder gegebenenfalls

C) 0 Gew.-% bis 40 Gew.-%, vorzugsweise 2 Gew.-% bis 20 Gew.-% und insbesondere 5 Gew.-% bis 15 Gew.-%, Epoxi-Gruppen-freier, aber Hydroxyl-Gruppen-haltiger Verbindungen, mit der Maßgabe, daß die Summe der Gew.-% der Komponenten A) + B) + C) jeweils 100 Gew.-% ist, mit einem Gehalt von

D) 0,1 bis 15 Gew.-%, vorzugsweise 0,5 bis 5 Gew.-%, bezogen jeweils auf 100 Gew.-% A) + B) + C), an Photoinitiatoren und gegebenenfalls

E) 0 bis 0,5 Gew.-%, vorzugsweise 0,01 bis 0,5 Gew.-%, bezogen jeweils auf 100 Gew.-% A) + B) + C), an Sensibilisatoren

zum Beschichten von Formkörpern aus thermoplastischen Polycarbonaten.

Die Mischungen, enthaltend die Komponenten A) + B) + E) und gegebenenfalls B) und/oder C), werden auf die Formkörper aus thermoplastischen Polycarbonaten aufgetragen und danach gehärtet.

Gegenstand der vorliegenden Erfindung ist somit auch ein Verfahren zum Beschichten von Formkörpern aus thermoplastischen Polycarbonaten, das dadurch gekennzeichnet ist, daß man die erfindungsgemäß zu verwendenden Mischungen, enthaltend die Komponenten A) + D) + E) und gegebenenfalls B) und/oder C), auf Formkörper aus Polycarbonat aufträgt und anschließend härtet, wobei gegebenenfalls vor der endgültigen Aushärtung der Beschichtungen die Polycarbonatformkörper weiter verformt werden.

Gegenstand der vorliegenden Erfindung sind außerdem die nach dem erfindungsgemäßen Verfahren beschichteten Formkörper aus thermoplastischen Polycarbonaten.

Polycarbonatformkörper werden aufgrund ihrer ausgezeichneten Eigenschaften, wie Transparenz, Schlagfestigkeit bzw. Stoßfestigkeit und Zugfestigkeit vielfältig verwendet. Die Eigenschaften der Oberfläche des Materials, wie ihre geringe Abrieb- und Kratzfestigkeit und die geringe Beständigkeit gegenüber Lösungsmitteln, sind jedoch für viele Einsatzgebiete ungenügend. Insbesondere neigt die Oberfläche des Materials im Kontakt mit der Außenwelt opak zu werden. Es wurden eine Vielzahl von Methoden zur Beseitigung dieses Mangels vorgeschlagen, z.B. die Verwendung von besonderen Überzügen auf Basis von Siloxan- oder oder Melaminharzen. Solche Verfahren sind z.B. beschrieben in der US-P 3 707 397 oder US-P 3 843 390.

Diese Überzüge sind jedoch schwierig herzustellen und haben Nachteile, z.B. werden diese Lacke bzw. Überzüge aus Lösungsmitteln appliziert und die Vernetzung wird bei höheren Temperaturen durchgeführt, wobei diese Behandlung derart ist, daß die Eigenschaften des polymeren Substrats negativ beeinflußt werden können. Solche Systeme müssen außerdem mehrschichtig aufgebaut werden und sind so spröde, daß keine Teile damit ausgerüstet werden können, die größeren Biegebeanspruchungen ausgesetzt sind.

Ferner ist bekannt, Formteile aus Polycarbonat mit einem Überzug aus einem Poly(meth)acrylat zu versehen, z.B. durch Beschichten des Formteils mit einem Lack auf Basis Poly(meth)acrylat, wie z.B. beschrieben in WO 86/04592 oder durch Heißverpressen von Polycarbonatplatten mit (Meth)acrylatfilmen.

Durch eine derartige Beschichtung von Formteilen aus Polycarbonat kann das System zwar wetterfest ausgerüstet werden, zumal dann, wenn der auf Polycarbonat aufgebrachte Film aus Polyacrylat einen UV-Absorber enthält; durch diese Beschichtungen wird jedoch die Kratzfestigkeit praktisch nicht geändert.

UV-härtende Lacksysteme erscheinen aufgrund ihrer schnellen Aushärtung als Beschichtungssysteme für Polycarbonat besonders geeignet. Beispiele dafür sind in dem US-Patent 3 968 305 und der PCT-Anmeldung WO 80/00968 beschrieben. Beide Systeme sind jedoch einerseits mangels ausreichender Haftung und zum anderen zusätzlich wegen unbefriedigender mechanischen Eigenschaften und unbefriedigender Kratzfestigkeit nicht ideal.

EP-A 0 274 593 un EP-A 0 274 596 beschreiben die Verwendung von polyfunktionellen Acrylaten als geeignetes Beschichtungsmittel. Allerdings härten diese Beschichtungen nur noch unter $N_2$ aus.

Durch die beiden letzten Beispiele wird ein gravierender Nachteil der radikalischen UV-Härtung deutlich, die $O_2$-Inhibierung.Radikalisch UV-härtende Beschichtungssysteme leiden alle mehr oder weniger an dieser Inhibierung, d.h. dem Verhindern des Fortschreitens der Reaktion ausgelöst durch Luftsauerstoff. Es kommt dabei zu nicht oder nicht ständig ausgehärteten Oberflächenschichten; die Beschichtung ist schmierig.

Weiterhin haben radikalisch UV-härtende Beschichtungen den Nachteil, daß die Reaktion nach dem Beschichten und Anhärten später nicht wieder aktiviert werden kann; es findet also keine Nachhärtung statt. Die Reaktion ist auch nicht zu steuern und läuft völlig unkontrolliert ab. Wünschenswert wäre aber die Möglichkeit den Aushärtungsgrad zu steuern. Hierdurch hätte man die Möglichkeit Formteile mit dem Lack zu beschichten, den Lack anzuhärten, das Formteil erst danach in die gewünschte Form zu bringen und

anschließend den Lack vollständig auszuhärten. Bei spröden Acrylatschichten wäre dies nicht möglich, da der Lack durch die nachträgliche Formgebung abplatzen oder zumindestens Risse zeigen würde.

Radikalisch UV-härtende Beschichtungen härten auch nur an Stellen aus, die durch das UV-Licht bestrahlt werden. Somit ist diese Technologie auf nahezu plane Substrate beschränkt, da stark sphärisch, also 3-dimensional gebaute Substrate Stellen aufweisen die im "Lichtschatten" liegen und somit nicht gehärtet werden können. Die Möglichkeit der Reaktivierung nach UV-Bestrahlung könnte dieses Problem lösen, in dem man diese beschichteten 3-dimensional gebauten Substrate durch UV-Bestrahlung anhärtet und erst danach die Beschichtung durch eine geeignete Maßnahme aushärtet.

Der vorliegenden Erfindung lag also die Aufgabe zugrunde, strahlenhärtende Beschichtungskompositionen zu Verfügung zu stellen, die auf Polycarbonaten kratzfeste Überzüge liefern, die keinerlei $O_2$-Inhibierung unterliegen und deren Polymerisationsverlauf durch geeignete Maßnahmen gezielt zu steuern ist.

Überraschenderweise wurde nun gefunden, daß eine Beschichtungskomposition auf Basis Epoxi-Gruppen-aufweisende Siloxane gegebenenfalls in Abmischung mit anderen Epoxi-Gruppen-bzw. Hydroxyl-Gruppen-aufweisenden Verbindungen diesen Anforderungen genügen.

Aus dem US-Patent 4 279 717 sind UV-härtbare Epoxigruppenhaltige Polysiloxane bekannt. Sie dienen zum Beschichten von Papier, Polyethylen oder Polypropylen.

Aus dem US-Patent 4 576 999 sind ebenfalls UV-härtbare Epoxigruppenhaltige Polysiloxane bekannt, die für Release-Beschichtungen vorgeschlagen werden.

Die Härtung dieser Polysiloxane wird durch monomere Epoxiverbindungen begünstigt (Spalte 10, Zeilen 29 ff. von US-Patent 4 576 999).

Als Photoinitiatoren können beispielsweise Diethoxyacetophenone und Iodoniumsalze dienen (s. Beispiel 19 des US-Patents 4 576 999).

Als geeignete Materialien, die beschichtet werden können, sind u.a. Polyesterfilme genannt (Spalte 10, Zeile 62). Besonders geeignet sind diese Materialien jedoch für Papier.

Demgegenüber lag es nicht nahe, derartige Systeme zum Beschichten von Polycarbonatformkörpern einzusetzen, weil durch die speziellen Eigenschaften von Polycarbonat, wie z.B. Spannungsrißempfindlichkeit, Chemikalienresistenz, Oberflächeneigenschaften usw., nur speziell auf Polycarbonat abgestimmte Beschichtungen geeignet sein können. Außerdem zeigen die in dem US-Patent 4 576 999 genannten Kompositionen nicht die gewünschte Kratzfestigkeiten auf hohem Niveau, sondern es handelt sich um relativ weiche, flexible Lackformulierungen, die in den mechanischen Eigenschaften der Unterlage (Papier oder Kunststoffilm) angepaßt sind.

Epoxigruppenhaltige, OH-gruppenfreie Polysiloxane gemäß Komponente A) sind Verbindungen mit 2 bis 20 Si-Atomen, vorzugsweise mit 4 bis 12 Si-Atomen.

Sie werden beispielsweise hergestellt durch Reaktion von Siloxan-Hydriden mit olefinisch ungesättigten Verbindungen, die Epoxigruppen enthalten.

Siloxan-Hydride im vorliegenden Zusammenhang sind wiederum Verbindungen, die eine oder mehrere der Strukturen A I, A II und/oder A III enthalten,

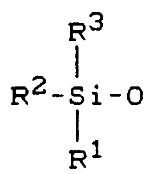 , 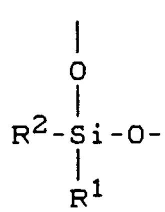 , 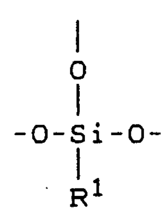 ,

(A I) (A II) (A III)

worin $R^1$, $R^2$, $R^3$ unabhängig voneinander H, $C_1$-$C_5$-Alkyl oder Phenyl bedeuten, mit der Maßgabe, daß mindestens an einem Si-Atom mindestens einer der Reste R H ist.

$C_1$-$C_5$-Alkyl-Reste sind beispielsweise $CH_3$, $C_2H_5$-, $C_3H_7$, iso-$C_3H_7$-, $C_4H_9$-, iso-$C_4H_9$ oder $C_5H_{11}$-, vorzugsweise $CH_3$ oder $C_2H_5$.

Phenyl kann auch substituiertes Phenyl sein, als Substituenten kommen $C_1$-$C_4$-Alkyl und/oder $C_1$-$C_4$-Alkoxy in Betracht, wie $CH_3$-O-, $C_2H_5$-O-, $C_3H_7$-O-, iso-$C_3H_7$-O-, $C_4H_9$-O- und iso-$C_4H_9$-O-.

Ein geeignetes Siloxan-Hydrid ist zum Beispiel die folgende Verbindung

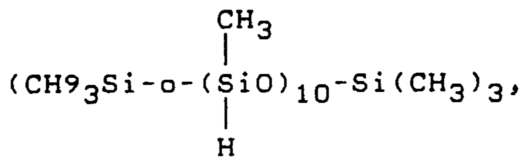

Die Reaktion eines solchen Siloxan-Hydrids zum Epoxigruppen aufweisenden Siloxan läßt sich durch die folgende Formelgleichung darstellen:

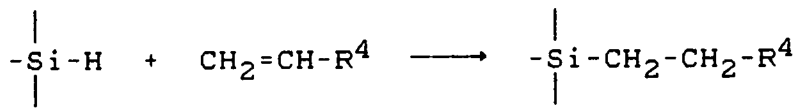

(A IV)

worin
$CH_2 = CH\text{-}R^4$ eine vinyl- oder allylfunktionalisierte Epoxiverbindung darstellt.

Vinylfunktionalisierte Epoxiverbindungen sowie allylfunktionalisierte Epoxiverbindungen sind bekannt. Die im vorliegenden Zusammenhang bevorzugt geeigneten sollen 4 bis 15 C-Atome enthalten und vorzugsweise aliphatischer oder cycloaliphatischer Natur sein.

Geeignete vinylfunktionalisierte Epoxiverbindungen sind beispielsweise Vinyl-norbornen-monoxid, Vinylcyclohexenoxid, Dicyclopentadienoxid oder Acrylsäureester von epoxidierten Alkoholen wie beispielsweise Glycidylacrylat.

Geeignete allylfunktionalisierte Epoxiverbindungen sind beispielsweise Allylether von epoxidierten Alkoholen wie Allyl-glycidylether.

Vinyl- oder allylfunktionalisierte Epoxiverbindungen der genannten Art lassen sich beispielhaft folgendermaßen in Formeln darstellen:

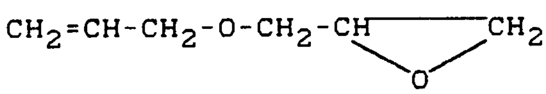

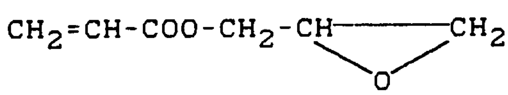

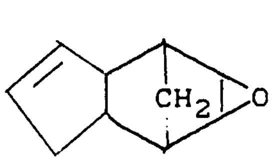

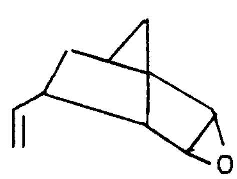

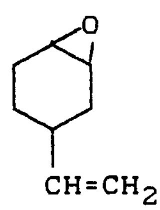

Die erfindungsgemäß geeigneten Epoxi-Gruppen-haltigen Polysiloxane gemäß Komponente A) sollen 2 bis 40 Gew.-%, vorzugsweise 3 bis 25 Gew.-% Epoxi-Gruppen enthalten.

Die erfindungsgemäß geeigneten Polysiloxane gemäß Komponente A) sind außerdem aus der Literatur bekannt (s. beispielsweise US-Patente 4 576 999 und 4 279 717).

Geeignete Polysiloxane gemäß Komponente A) sind vorzugsweise die in den Beispielen eingesetzten Verbindungen wie

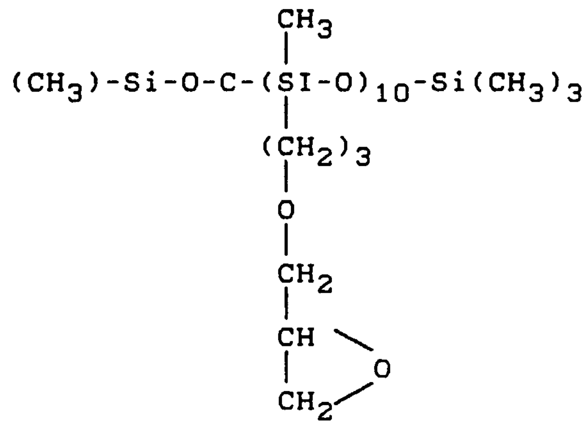

Andere, Epoxi-Gruppen-haltige, OH-Gruppen-freie Verbindungen gemäß Komponente B) sind vorzugsweise aliphatische Epoxiverbindungen und cycloaliphatische Epoxiverbindungen. Die Zahl der Epoxigruppen liegt zwischen 1 und 6, vorzugsweise zwischen 1 und 3.

Beispiele für aliphatische Epoxiverbindungen sind solche der Formel (B I)

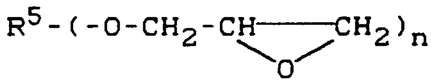

(B I)

worin

n eine ganze Zahl von 1 bis 6, vorzugsweise von 1 bis 3 ist und

$R^5$ ein n-bindiges $C_1$-$C_{15}$-Alkan oder ein n-bindiger $C_6$-$C_{36}$-Aromat ist.

Beispiele für $C_1$-$C_{15}$-Alkane $R^5$ sind Methan, Ethan, Propan, Butan, Isobutan, die isomeren Pentane, Hexane, Octane, Decane, Dodecane und Pentadekane.

Beispiele für $C_6$-$C_{36}$-Aromaten $R^5$ sind Benzol, Naphthalin, Anthracen, Alkyl-substituierte Benzole, Halogensubstituierte Benzole, gegebenenfalls Alkyl-substituierte Diphenyle sowie Verbindungen der Formel (B $I^1$)

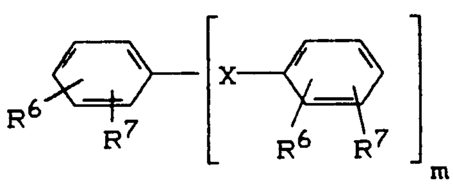

(B $I^1$)

worin m 1 oder 2 ist und

worin $R^6$ und $R^7$ unabhängig voneinander H, Br, Cl, $CH_3$- oder $C_2H_5$ sind und worin X ein Brückenglied wie -O-, -S-, $-SO_2-$, -CO-, ein $C_1$-$C_5$-Alkyliden oder ein $C_3$-$C_{10}$-Cycloalkyliden ist.

Bevorzugte $C_1$-$C_5$-Alkylidene sind Methylen und Isopropyliden, bevorzugte $C_3$-$C_{10}$-Cycloalkylidene sind Cyclopentyliden und Cyclohexyliden sowie alkylsubstituierte Cyclopentylidene und Cyclohexylidene wie 3,5,5-Trimethyl-cyclohexyliden und 2,4,4-Trimethyl-cyclopentyliden.

Diese Epoxiverbindungen gemäß Formel (B I) sind literaturbekannt (s. beispielsweise US-Patent 3 018 262 oder "Handbook of Epoxy Resins", Lee and Neville, McGruw-Hill Book Co., New York 1967) oder nach bekannten Verfahren erhältlich, beispielsweise durch Umsetzung eines mehrwertigen Phenols, beispielsweise eines Diphenols mit Epichlorhydrin.

Ein Beispiel dafür ist der bis-epoxidierte Propoxy-ether vom Bisphenol A der folgenden Formel

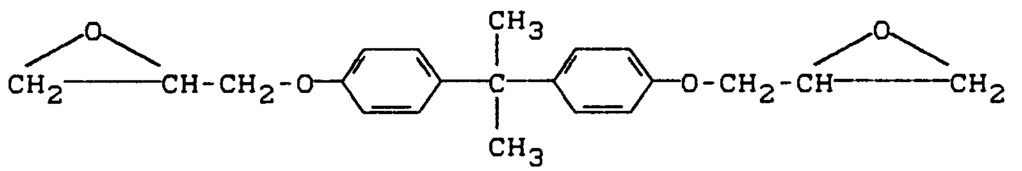

Weitere Beispiele für aliphatische Epoxiverbindungen sind Octadecylenoxid, Epichlorhydrin, Dipentendioxid, Glycid und Styroloxid.

Beispiele für cycloaliphatische Epoxiverbindungen sind Epoxicyclohexancarboxylate wie 3,4-Epoxycyclohexylmethyl-3,4-epoxy-cyclohexancarboxylat, 3,4-Epoxy-2-methylcyclohexylmethyl-3,4-epoxy-2-methylcyclohexancarboxylat, Bis-(3,4-epoxy-6-methylcyclohexylmethyl)-adipat. Solche Epoxid-Gruppen-haltige Verbindungen sind in US 3 117 099 beschrieben. Weitere Beispiele sind Vinyl-cyclohexenoxid und Bis-(2,3-epoxicyclopentyl)-ether.

Epoxi-Gruppen-freie, aber Hydroxyl-Gruppen-haltige Verbindungen gemäß Komponente C) sind monomere und polymere Verbindungen mit mindestens einer, vorzugsweise mit 2 bis 10 alkoholischen OH-Gruppen, wobei die Molekulargewichte vorzugsweise bis zu einem $\overline{M}_n$ (Zahlenmittelmolekulargewicht ermittelt durch Gelpermeationschromatographie von 10 000, sein können.

Die OH-Gruppen-haltigen Verbindungen können flüssig oder fest sein.

Beispiele hierfür sind: Alkanole, Alkylether von Polyoxyalkylenglycolen, Alkylenglycole, Polyhydroxyverbindungen. Spezielle Beispiele sind: 1,2-Ethandiol, 1,2- und 1,3-Propandiol, Diethylenglycol, Triethylenglycol, 1,2-, 1,3-, 2,3- und 1,4-Butandiol, 2-Ethyl-1,6-hexandiol, Bis-(hydroxymethyl)-cyclohexan, 1,18-Dihydroxyoctadecan, 3-Chlor-1,2-propandiol, Glycerin, Trimethylolpropan, Pentaerythrit, Sorbit, Polyoxypropylenglycole bzw. Polyoxyethylenglycole bzw. Polyoxytetramethylenglycole mit Molekulargewichten um 200 bis etwa 10 000, vorzugsweise von 500 bis 2500.

Erfindungsgemäß geeignete Photoinitiatoren gemäß Komponente D) sind solche, die Epoxide polymerisieren können,

Geeignete Photoinitiatoren sind beispielsweise solche, die unter UV-Bestrahlung eine Lewis-Säure freisetzen, die die Polymerisation der Epoxigruppen einleiten kann.

Solche Photoinitiatoren sind bekannt und können in bekannter Weise hergestellt werden (J. Am. Chem. Soc. 91 (1969), 145; J. Org. Chem. 35 (1970), 2532; US 2 807 648; Bull. Soc. Chem. Belg. 73 (1964), 546; J Am. Chem. Soc. 51 (1929), 2587).

Die erfindungsgemäß geeigneten Photoinitiatoren gehören zur Klasse der Onium-Salze und können in drei Gruppen eingeteilt werden, nämlich in die Halonium-Photoinitiatoren, in die Onium-Photoinitiatoren mit Elementen der Gruppe VIa des Periodensystems der Elemente - etwa die Sulfonium-Photoinitiatoren - und drittens in die Phosphonium-Photoinitiatoren.

Oniumsalze der genannten Art als Photoinitiatoren sind bekannt, beispielsweise aus US 4 026 707, US 3 981 897 und US 4 069 055. Typische und häufig eingesetzte Vertreter sind beispielsweise:

$Ph_3S^{\oplus}PF_6^{\ominus}$, $Ph_3S^{\oplus}SbF_6^{\ominus}$ und 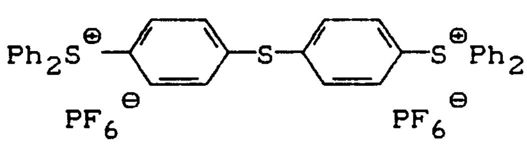

Erfindungsgemäß geeignete Sensibilisatoren gemäß Komponente E) sind bekannt (s. beispielsweise Kick-Othmer, Encyclopedia, Vol. 2, Seiten 194-197, 2. Auflage, John Wiley & Sons, 1965).

Typische Beispiele hierfür sind: 4,4'-(Bis-dimethylamino)-benzophenon, Benzoflavin, Thioxanthon, Aminoxanthene, Acridin-Gelb.

Die Vermischung der Komponenten A), D), E) und gegebenenfalls B) und/oder C) erfolgt nach üblichen Verfahren z.B. bei Raumtemperatur unter Ausschluß von direkter Lichteinwirkung.

Den erfindungsgemäß zu verwendenden Mischungen können während oder nach ihrer Herstellung noch für Polycarbonatüberzüge übliche Additive wie Stabilisatoren, UV-Absorber, Farbstoffe in solchen Mengen zugemischt werden, daß die Photopolymerisation und die Transparenz der Beschichtungen nicht beeinträchtigt wird.

Die erfindungsgemäße Beschichtung der Polycarbonatformkörper kann nach üblichen Verfahren, beispielsweise durch Tauchen, Besprühen, Beschleudern oder Walzen der Polycarbonatformkörper, erfolgen, insbesondere eignen sich Spritz- und Tauchverfahren.

Die Härtung der Beschichtungen wird beispielsweise durch UV-Strahlung ausgelöst, wozu handelsüblich UV-Strahler Verwendung finden, woran sich die Temperung der Beschichtungen anschließen kann.

Es ist ferner möglich, die beschichteten Polycarbonatformkörper vor der Härtung zu erwärmen, eventuell durch IR-Strahler, und dann bei erhöhter Temperatur mittels UV-Strahlung zu härten.

Eine weitere vorteilhafte Ausführungsform der erfindungsgemäßen Beschichtung besteht darin, daß man die Polymerisation der Beschichtung photochemisch lediglich induziert, die beschichteten Polycarbonatformkörper in ihre endgültige Form bringt und anschließend die Polymerisation, bevorzugt durch Temperung bei erhöhter Temperatur, die die Glastemperatur des Formkörpers nicht überschreiten sollte, beendet, Die Beendigung der Polymerisation kann auch bei Raumtemperatur erfolgen, was allerdings längere Zeit in Anspruch nimmt.

Thermoplastische Polycarbonate im Sinne der vorliegenden Erfindung sind bekannt. Hierbei kommen die durch Umsetzung von Diphenolen, insbesondere von Dihydroxydiarylalkanen und/oder Dihydroxydiarylcycloalkanen, mit Phosgen oder Diestern der Kohlensäure erhältlichen Polykondensate in Betracht, wobei außer den unsubstituierten Diphenolen auch solche geeignet sind, deren Arylreste in o- und/oder m-Stellung zur Hydroxylgruppe Methylgruppen oder Halogenatome tragen. Ebenso sind verzweigte Polycarbonate geeignet.

Die Polycarbonate haben mittlere Gewichtsmittel-Molekulargewichte $\overline{M}_w$ zwischen 10 000 und 100 000, vorzugsweise zwischen 20 000 und 40 000, ermittelt durch Messungen der rel. Viskosität in $CH_2Cl_2$ bei 25 °C und einer Konzentration von 0,5 g/100 ml.

Geeignete Diphenole sind z.B. Hydrochinon, Resorcin, 4,4'-Dihydroxydiphenyl, Bis-(hydroxy-phenyl)-alkane wie beispielsweise $C_1$-$C_8$-Alkylen bzw. $C_2$-$C_8$-Alkylidenbisphenole, Bis-(hydroxy-phenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha,\alpha'$-Bis-(hydroxyphenyl)-diisopropylbenzol sowie die entsprechenden kernalkylierten bzw. kernhalogenierten Verbindungen. Bevorzugt sind Polycarbonate auf Basis Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibrom-phenyl)-propan-2,2(Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z), $\alpha,\alpha'$-Bis-(4-hydroxy-phenyl)-p-diisopropylbenzol und Bis-(4-hydroxy-phenyl)-3,5,5-trimethylcyclohexan.

Weitere für die Herstellung der Polycarbonate geeignete Diphenole sind in den US-Patenten 2 970 131, 2 991 273, 2 999 835, 2 999 846, 4 982 014, 3 028 365, 3 062 781, 3 148 172, 3 271 367 und 3 275 601 beschrieben.

Die Polycarbonate, ihre Herstellung und Verwendung zur Herstellung von Formkörpern sind beispielsweise außerdem in "Chemistry and Physics of Polycarbonates", Polymer Rev. Vol, 9, Interscience Publishers beschrieben, Sie können gegebenenfalls unter Zusatz bekannter Kettenabbrecher (s. EP-A 0 010 602, DE-OS 3 143 252), Verzweiger wie Trisphenolen und/oder Isatinbiskresol(phenol) (s. die deutschen Offenlegungsschriften 1 570 533, 1 595 762, 2 500 092), Stabilisatoren wie Phosphanen und/oder Phosphiten (s. EP-A 0 143 906, DE-OS 2 140 207) und Entformungsmitteln (s. die deutschen Offenlegungsschriften 2 507 748, 2 729 485 und 2 064 095) hergestellt werden, Ferner können die Polycarbonate UV-Absorber enthalten.

Die Herstellung der Formkörper aus den thermoplastischen Polycarbonaten erfolgt beispielsweise durch Extrusion oder Spritzguß. Falls man Folien herstellen will, kann dies auch nach dem Gießverfahren erfolgen.

Beispiele für Formkörper aus den thermoplastischen Polycarbonaten, die erfindungsgemäß beschichtet werden können, sind Gebrauchsgegenstände aller Art, Elektroartikel, Abdeckplatten, Sichtblenden, Sicherheitsscheiben, Massivplatten und Hohlkammerplatten.

Die Verwendung dieser beschichteten Polycarbonatformkörper kann im Gebrauchsgüterbereich erfolgen, wo die Gefahr des Abriebs und der Bildung von Kratzern besonders groß ist, beispielsweise für Lampenabdeckungen.

## Beispiele

Die in den folgenden Beispielen beschriebenen Beschichtungskompositionen wurden auf Platten aus Bisphenol-A-Homopolycarbonat mit den Maßen 105 x 150 x 3 mm mittels eines Spin-coaters appliziert. Die Drehgeschwindigkeit wurde so variiert, daß die Schichtdicke nach der Härtung zwischen 5-10 µm betrug. Die Härtung erfolgte mittels einer UV-Bestrahlungsanlage der Firma IST, Typ 200-11-1-Tr.

Die Bandgeschwindigkeit betrug 2 m/min. Anschließend wurde 2 h bei 80 °C nachgetempert. Direkt

nach UV-Bestrahlung sind die Beschichtungskompositionen, wenn nicht anders angegeben, klebfrei, jedoch noch nicht kratzfest`

Haftfähigkeit

Zur Beurteilung der Haftung der Beschichtung wurde eine Gitterschnittprüfung durch Einritzen eines Rasters von 6 x 6 Linien mit einem Abstand von jeweils 1 mm in die Beschichtung mit anschließendem Aufdrücken sowie schnellem Abziehen eines Klebebandes durchgeführt. Die Einteilung in Gt 0 bis Gt 5 erfolgte danach entsprechend der Maßgabe der DIN 53 151. GtO ist das beste Ergebnis, Gt5 das schlechteste.

Kratzfestigkeit

Durch Scheuern eines Musters mit Stahlwolle der Klasse 0000 wurde die Kratzfestigkeit bestimmt. Die Eigenschaften wurden wie folgt charakterisiert.

- \+ + geringe Kratzspuren nach längerem, starken Scheuern
- 0 vereinzelt starke Kratzer, Beschichtung durch zahlreiche kleinere Kratzer durch längeres, starkes Scheuern leicht trüb
- \- Kratzer bereits nach schwachem Scheuern

Als Komponente A) wurden folgende Polysiloxane benutzt:

1.

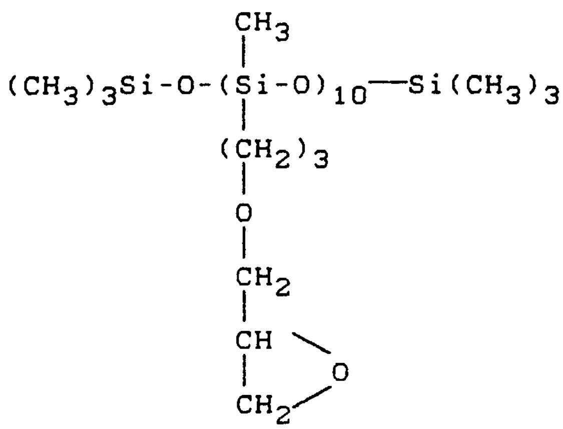

2.

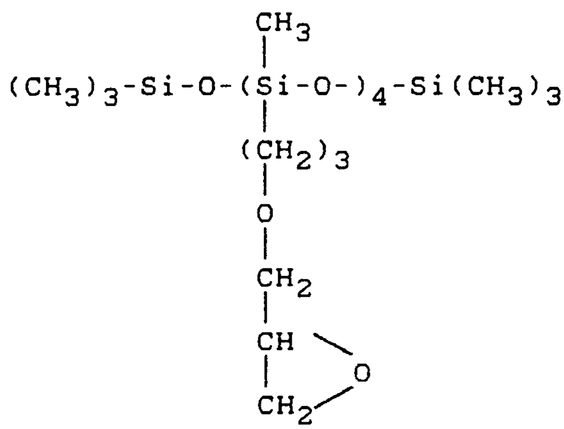

3. 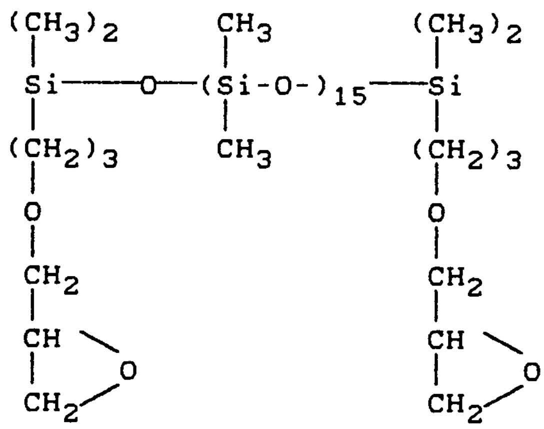

Als Komponenten B wurden benutzt

1.

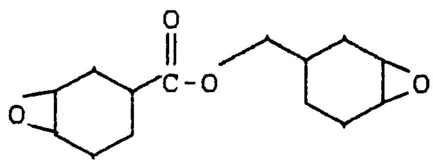

2. Cyracure UVR 6200 der Union Carbide (Cycloaliphatisches Epoxid).
3. Cyracure UVR 6100 der Union Carbide (Cycloaliphatisches Epoxid).
4. Cyracure UVR 6110 der Union Carbide (Cycloaliphatisches Epoxid).
5. Cyracure UCR 6351 der Union Carbide (Cycloaliphatisches Epoxid).

Als Komponente C wurde Triethylenglycol verwendet.

Als Komponente D wurde

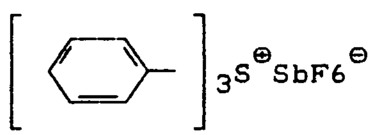

verwendet.
(Cyracure UVI 6974 der Union Carbide).

Als Komponente E wurde Athracen verwendet.

Folgende Beschichtungskompositionen wurden hergestellt:

| Beispiel | $A_1$ | $A_2$ | $A_3$ | $B_1$ | $B_2$ | $B_3$ | $B_4$ | $B_5$ | C | D | E |
|---|---|---|---|---|---|---|---|---|---|---|---|
| 1 | 100 | | | | | | | | | 3 | |
| 2 | 50 | | | 50 | | | | | | 3 | |
| 3 | 80 | | | | | 20 | | | | 3 | |
| 4 | | 50 | | | | 50 | | | | 3 | |
| 5 | | | 20 | 70 | 10 | | | | | 3 | |
| 6 | 33 | | | | 33 | | 33 | | | | |
| 7 | 25 | | | | 25 | | 25 | 25 | | 2 | |
| 8 | | 80 | | | | | 20 | | | 2 | |
| 9 | 80 | | | 20 | | | | | | 2 | 0,2 |
| 10 | 80 | | | 15 | | | | | 5 | 2 | |
| 11 | | | | | | 100 | | | | 2 | |
| 12 | | | | | 20 | | 40 | 40 | | 2 | |

(Angaben in Prozent)

Beurteilung der Beschichtungskompositionen:

| Beispiel | Kratzfestigkeit | Haftung | Visuelle Beurteilung der Lackschicht |
|---|---|---|---|
| 1 | + + | Gt 1 | + |
| 2 | + + | Gt 0 | + + |
| 3 | + + | Gt 0 | + |
| 4 | 0 | Gt 0 | + + |
| 5 | 0 | Gt 0 | + |
| 6 | + + | Gt 1 | + |
| 7 | + + | Gt 2 | + + |
| 8 | + + | Gt 1 | + |
| 9 | + + | Gt 0 | + |
| 10 | 0 | Gt 0 | + |
| 11 | - | Gt 0 | + |
| 12 | - | Gt 0 | 0 |
| Visuelle Beurteilung:<br>+ + sehr glatte Oberfläche, störungsfrei<br>+ glatte Oberfläche, störungsfrei<br>0 glatte Oberfläche, vereinzelt Störungen | | | |

Zur Ermittlung einr eventuell vorliegenden $O_2$-Inhibierung wurde Beispiel 2 einmal unter Stickstoffbeschleierung und einmal unter Luftatmosphäre bestrahlt und anschließend 2 h bei 80°C nachgetempert. Die Kratzfestigkeit wurde wie oben ermittelt. Als Vergleich (V1) diente eine Mischung aus 50 Teilen. Hexandioldiacrylat und 50 Teile Trimethylolpropantrisacrylat mit 3 Gew.-% 2,2-Dimethyl-2-phenylacetophenon als Photoinitiator gemäß des EP-A 0 274 596, einmal unter Stickstoffbeschleierung und einmal unter Luftatmosphäre gehärtet.

| Beispiel | Kratzfestigkeit |
|---|---|
| 2/Luft | + + |
| 2/$N_2$ | + + |
| V1/Luft | - |
| V1/$N_2$ | + |

Zur Klärung der Frage der nachträglichen Verformbarkeit wurde eine 250 µm Bisphenol-A-Homopolycarbonat Folie mit der Beschichtungskomposition 2 beschichtet, UV-gehärtet, um einen Dorn mit einem Radius von 1 cm gebogen, fixiert und anschließend 2 h bei 80°C nachgetempert. Die Beschichtung war einwandfrei. Als Vergleich diente das Beispiel Nr. 8 der DOS 3 819 627 $A_1$. Beim Biegen um den selben Radius nach UV-Härtung waren in der Beschichtung deutliche Risse zu erkennen.

**Patentansprüche**

**1.** Verwendung von UV-härtbaren Mischungen, enthaltend

A) 10 Gew.-% bis 100 Gew.-% eines Epoxi-Gruppen-enthaltenden, OH-Gruppen-freien Polysiloxans und gegebenenfalls

B) O Gew.-% bis 90 Gew.-% anderer Epoxi-Gruppen-haltiger, OH-Gruppen-freier Verbindungen als A), und/oder gegebenenfalls

C) 0 Gew.-% bis 40 Gew.-% Epoxi-Gruppen-freier, aber Hydroxyl-Gruppen-haltiger Verbindungen,

mit der Maßgabe, daß die Summe der Gew.-% der Komponenten A) + B) + C) jeweils 100 Gew.-% ist, mit einem Gehalt von

D) 0,1 bis 15 Gew.-%, bezogen jeweils auf 100 Gew.-% A) + B) + C), an Photoinitiatoren und gegebenenfalls

E) 0 bis 0,5 Gew.-%, bezogen jeweils auf 100 Gew.-% A) + B) + C) an Sensibilisatoren

zum Beschichten von Formkörpern aus thermoplastischen Polycarbonaten.

**2.** Verwendung der UV-härtbaren Mischungen gemäß Anspruch 1, enthaltend an

A) 28 Gew.-% bis 88 Gew.-%, an
B) 10 Gew.-% bis 70 Gew.-%, und an
C) 2 Gew.-% bis 20 Gew.-%,
mit der Maßgabe, daß die Summe der Gew.-% der Komponenten A) + B) + C) jeweils 100 Gew.-% ist, und mit dem Gehalt an D) und E).

**3.** Verwendung der UV-härtbaren Mischungen gemäß Anspruch 1, enthaltend an
A) 45 Gew.-% bis 85 Gew.-%, an
B) 10 Gew.-% bis 50 Gew.-% und an
C) 5 Gew.-% bis 15 Gew.-%,
mit der Maßgabe, daß die Summe der Gew.-% der Komponenten A) + B) + C) jeweils 100 Gew.-% ist, und mit dem Gehalt an D) und E).

**4.** Verfahren zum Beschichten von Formkörpern aus thermoplastischen Polycarbonaten, dadurch gekennzeichnet, daß man die Mischungen des Anspruchs 1, enthaltend die Komponenten A) + D) + E) und gegebenenfalls B) und/oder C) auf Formkörper aus Polycarbonat aufträgt und anschließend härtet.

**5.** Verfahren gemäß Anspruch 4, dadurch gekennzeichnet, daß man von der endgültigen Aushärtung der Beschichtungen die Polycarbonatformkörper weiter verformt.

**6.** Beschichtete Polycarbonatformkörper, erhältlich nach dem Verfahren des Anspruchs 4.

**7.** Beschichtete Polycarbonatformkörper, erhältlich nach dem Verfahren des Anspruchs 5.

Europäisches Patentamt

# EUROPÄISCHER RECHERCHENBERICHT

Nummer der Anmeldung

EP 92 11 1989

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 391 162 (GENERAL ELECTRIC COMPANY)<br>* Ansprüche 1,8,9 *<br>* Seite 3, Zeile 43 - Seite 4, Zeile 10 *<br>* Seite 4, Zeile 25 - Zeile 50 *<br>--- | 1-3 | C08J7/04<br>C09D183/06<br>C09D163/00 |
| A | EP-A-0 404 029 (GENERAL ELECTRIC COMPANY)<br>* Anspruch 1 *<br>--- | 1 | |
| A | EP-A-0 431 809 (DOW CORNING CORP.)<br>* Anspruch 1 *<br>--- | 1 | |
| A | US-A-4 547 431 (RICHARD P. ECKBERG)<br>* Anspruch 1 *<br>----- | 1 | |

RECHERCHIERTE SACHGEBIETE (Int. Cl.5 )

C08J
C09D
C08L

Der vorliegende Recherchenbericht wurde für alle Patentansprüche erstellt

| Recherchenort | Abschlußdatum der Recherche | Prüfer |
|---|---|---|
| DEN HAAG | 19 NOVEMBER 1992 | DEPIJPER R.D.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument